# EUROPÄISCHE PATENTSCHRIFT

(11) **EP 0 515 782 B1**
(45) Veröffentlichungstag und Bekanntmachung des Hinweises auf die Patenterteilung: **23.02.1994**
(21) Anmeldenummer: 92104472.3
(22) Anmeldetag: 16.03.1992
(51) Int. Cl.: H02K 3/50

(54) **Halterung für Wickelköpfe elektrischer Maschinen**
Electrical machines winding heads fastening
Fixation de têtes de bobinage de machines électriques

(30) Priorität: 31.05.1991 DE 4117905
(43) Veröffentlichungstag der Anmeldung: 02.12.1992
(73) Patentinhaber: Licentia Patent-Verwaltungs-GmbH, 60596 Frankfurt (DE)
(72) Erfinder: Pöpelt, Bernhard, W-2900 Oldenburg (DE); Hadeler, Dieter, W-2900 Oldenburg (DE)
(74) Vertreter: Vogl, Leo, Dipl.-Ing.

(56) Entgegenhaltungen:
- DE-U- 7 411 810
- US-A- 4 322 647
- PATENT ABSTRACTS OF JAPAN vol. 013, no. 490 (E-841)7. November 1989 & JP-A-01 194840 (HITACHI LTD) 4 August 1989
- PATENT ABSTRACTS OF JAPAN vol. 015, no. 314 (M-1145)12. August 1991& JP-A-03117796 (FUJIPURA SEIKO K.K.) 20 Mai 1991
- PATENT ABSTRACTS OF JAPAN vol. 02, no. 121 (E-78)(7199) 12. Oktober 1978 & JP-A-53 088 902 (HITACHI SEISAKUSHO K.K.) 8 April 1978
- PATENT ABSTRACTS OF JAPAN vol. 06, no. 140 (E-121)(1018) 29. Juli 1982 & JP-A-57 065 240 (TOKYO SHIBAURA DENKI K.K) 20 April 1982

## Beschreibung

Die Erfindung betrifft eine Halterung für Wickelköpfe elektrischer Maschinen der im Oberbegriff des Patentanspruchs 1 angegebenen Art.

Es gibt verschiedene Verfahren, um die Wicklungsköpfe zu festigen und auf diese Weise vor Beschädigungen zu schützen. Eine der gebräuchlichsten Verfahren ist das Bandagieren, wobei die Wicklungsköpfe durch Umschlingen mit Baumwollband, Glasseide, Schnur oder dergleichen von Hand oder maschinell fest zusammengeschnürt werden. Bei der maschinellen Herstellung von Motoren wird dabei in der Regel so vorgegangen, daß die z. B. in einem Stator eingezogenen Wicklungen im Bereich des stirnseitig über das Statorblechpaket vorstehenden Wicklungsköpfe vorgeformt werden, dann das Bandagieren folgt und schließlich ein zweiter Preß- bzw. Formvorgang die bandagierten Wicklungsköpfe noch genau ausrichtet. Ein Nachteil besteht darin, daß die Form- und Bandagiervorgänge nacheinander stattfinden. Dabei federn die vorgeformten Wicklungsköpfe infolge Eigenelastizität teilweise wieder auf, bevor sie bandagiert werden, lassen sich dann nicht fest gepackt umschnüren und lockern sich durch das Nachformen in der Bandage weiter, so daß während des späteren Betriebes des Motors Eigenbewegungen und Schwingungen einzelner Drähte möglich sind, die dann zum Bruch führen können.

Eine Verbesserung der Halterung der Wickelköpfe wurde dadurch erzielt, daß die Wicklungsteile des Wickelkopfes durch einen laschenartigen, verrastbaren Kabelbinder festgelegt wurden (siehe DE-U-7411810). Obwohl dieser Kabelbinder beim Festlegen der Wicklungsteile selbsttätig verrastet, kann dieser später noch seitlich verrutschen, wodurch einzelne Drähte lose werden und in Schwingungen geraten können. Durch eine Tränkung des Wickelkopfes mit dem Kabelbinder wird dieses Verrutschen zwar verhindert, aber ist ein zusätzlicher Arbeitsgang erforderlich. Hierdurch wird die Herstellung der elektrischen Maschinen zusätzlich verteuert.

Der Erfindung liegt die Aufgabe zugrunde, eine Halterung für die Wickelköpfe elektrischer Maschinen zu schaffen, die die oben genannten Nachteile vermeidet, leicht anzubringen ist und sicher dafür sorgt, daß die Wickelköpfe zu keiner Zeit lose zum Schwingen neigende Drähte aufweisen. Diese Aufgabe wird durch die im Patentanspruch 1 gekennzeichnete Erfindung gelöst.

Die erfindungsgemäße Halterung ermöglicht eine einfache, billige und sichere Festlegung der Windungsteile von Wickelköpfen in elektrischen Maschinen. Ein Verrutschen des Kabelbinders wird ohne Tränkung des Wicklungskopfes sicher vermieden. Durch den Nichteinsatz von Tränklack wird die Umwelt auch nicht durch Lösungsmittel belastet.

Weitere vorteilhafte Weiterbildungen sind den weiteren Unteransprüchen zu entnehmen.

Es zeigen:
- Figur 1: eine schaubildliche Darstellung einer elektrischen Maschine mit einem Kabelbinder am Wickelkopf,
- Figur 2: Einzelheiten des Kabelbinders und
- Figur 3: eine Stirnansicht auf einen Stator.

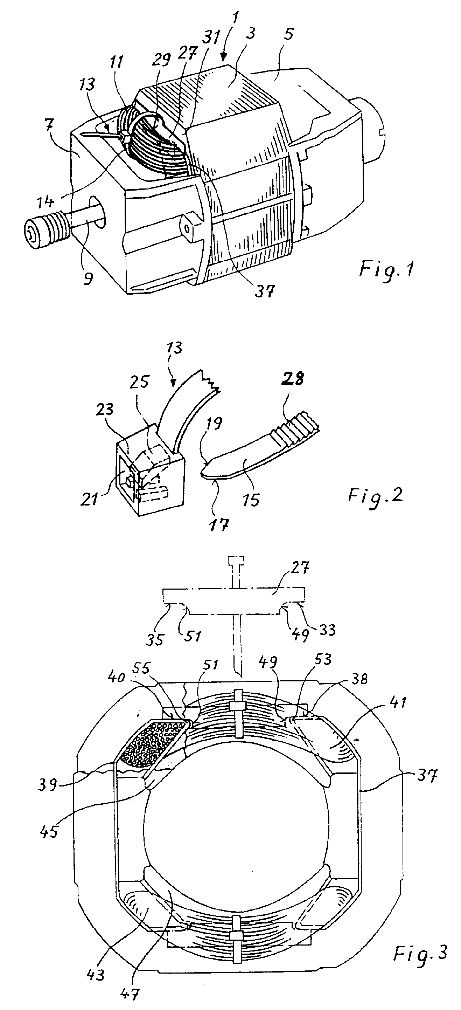

Die Figuren 1 bis 3 zeigen eine elektrische Maschine 1 mit einem Statorblechpaket 3 und Lagerschilden 5 und 7 für eine Ankerwelle 9. Außerdem ist ein stirnseitig über das Statorblechpaket 3 vorstehender Wicklungskopf 11 zu sehen, welcher mittels eines laschenartigen Kabelbinders 13 festgehaltert ist. Dieser Kabelbinder 13 ist an einem Ende 15 zungenartig mit zu einer Spitze zusammenlaufenden Einfädelungsschrägen 17, 19 für einen Durchtrittsschlitz 21 eines Verschlußelementes 23 versehen. In diesem Durchtrittsschlitz 21 ist ein federnder Rastzahn 25 angeordnet, welcher in einer Verzahnung 28 an dem Kabelbinder 13 derart einrastet, daß die den Wicklungskopf 11 umschließende Schlaufe 14 des Kabelbinders 13 sich nicht mehr vergrößern bzw. öffnen kann. Der Kabelbinder 13 ist mit dem Verschlußelement 23 einstückig ausgebildet und besteht aus einem Kunststoffspritzteil. Um ein seitliches Verrutschen des Kabelbinders 13 nach dessen Festziehen zum Einschnüren des Wicklungskopfes 11 zu verhindern, weist der Kabelbinder 13 einen Sperrsteg 27 auf. Dieser Sperrsteg 27 wird vor dem Verrasten des Kabelbinders 13 in den freien Raum 29 zwischen der Stirnseite 31 des Statorblechpaketes 3 und des Wicklungskopfes 11 soweit geschoben, bis an der Unterseite des Sperrsteges 27 angeordnete Anschlagkanten 33, 35 mit gegenüber der Stirnfläche 31 vorstehenden Anschlagflächen 38, 40 von Isolationsteilen 37, 39 zur Anlage gelangen. Diese Isolationsteile 37, 39 dienen in bekannter Weise zur Isolation von Wicklungen 41, 43; 11 gegenüber dem Statorblechpaket 3 mit den Polschuhen 45, 47 gemäß Figur 3.

Um ein Verrutschen der Kabelbinder 13 auf den Wicklungen 41, 43; 11 zu verhindern, sind an dem Sperrsteg 27 noch seitliche Anschläge 49, 51 angeordnet, die Gegenanschlägen 53, 55 an den Isolationsteilen 37, 39 im Nutengrund dicht gegenüberliegen. Hierdurch wird auf einfachste Weise ein seitliches Verschieben des Kabelbinders 13 sicher verhindert. Eine Tränkung des Kabelbinders 13 ist nicht mehr erforderlich, wodurch auch noch ein zusätzlicher Arbeitsgang eingespart wird. Die Anschlagkanten 33, 35 und die seitlichen Anschläge 49, 51 sind durch rechteckförmige Ausschnitte an den Ecken der Unterseite des Sperrsteges 27 gebildet. Die seitlichen Anschläge 49, 51 sind über eine Abrundung mit den um 90 Grad versetzt angeordneten Anschlägen 33, 35 verbunden. Mit dem Festziehen des Kabelbinders 13 wird der Sperrsteg 27 in dem Fenster 29 zwischen der Wicklungsspule 11, 41, 43 und der Stirnseite 31 des Blechpaketes 3 automatisch derart verkeilt, daß ein seitliches Verschieben des Kabelbinders auch nach Schrumpfung der Wicklungsköpfe sicher vermieden wird.

Im Rahmen der Erfindung kann der Kabelbinder 13 mit dem Sperrsteg 27 auch anders ausgebildet sein, derart, daß dieser auch für Wicklungsköpfe an einem Rotor einsetzbar ist. Wesentlich ist, daß der Kabelbinder 13 selbst nach Schrumpfung der Wicklungsköpfe nicht seitlich verrutschen kann.

## Patentansprüche

1. Halterung für Wicklungsköpfe (11) elektrischer Maschinen mittels die Wicklungsteile des Wickelkopfes umschließenden, laschenartigen Kabelbinders (13), welcher an einem Ende (15) zungenartig ausgebildet ist und eine Verzahnung (28) aufweist, in welche ein federnder Rastzahn an dem anderen Ende eines Verschlußelementes einrastbar ist, **dadurch gekennzeichnet,** daß der laschenartige Kabelbinder (13) zwischen seiner Verzahnung (28) und dem Verschlußelement (23) einen Sperrsteg (27) aufweist, der in den Zwischenraum (29) zwischen Spule (11, 41, 43) und der Stirnseite (31) des zugehörigen Blechpaketes (3) einschieb- und verkeilbar ist.

2. Halterung nach Anspruch 1, **dadurch gekennzeichnet,** daß der Sperrsteg (27) rechteckförmig ausgebildet ist mit an seinen unteren Ecken rechteckförmigen Aussparungen zur Bildung von Anschlagkanten (33, 35), die mit gegenüber der Stirnfläche (31) des Blechpaketes (3) vorstehenden Anschlagflächen (38, 40) von Isolationsteilen (37, 39) in Anlage bringbar sind, und von seitlichen Anschlägen (49, 51), die ein seitliches Verrutschen des Kabelbinders (13) durch Anschlagen gegen Gegenanschläge (53, 55) an den Isolationsteilen (37, 39) verhindern.

3. Halterung nach einem der vorhergehenden Ansprüche, **dadurch** **gekennzeichnet**, daß der Kabelbinder (13) ein Kunststoffspritzteil ist und aus einem Thermoplast besteht.

## Claims

1. Holder for winding ends (11) of electrical machines by means of a strap-like cable tie (13), which encircles the winding part of the winding head and which is formed to be tongue-like at one end (15) and has a toothing (28) in which a resilient detent tooth at the other end of a closure element can be detented, characterised thereby that the strap-like cable tie (13) has, between its toothing (28) and the closure element (23), a locking web (27), which can be pushed into and wedged in the intermediate space (29) between coil (11, 41, 43) and the end face (31) of the associated lamination body (3).

2. Holder according to claim 1, characterised thereby that the locking web (27) is formed to be rectangular with, at its lower corners, rectangular recesses for the formation firstly of abutment edges (33, 35), which can be brought into contact with abutment surfaces (38, 40), which project relative to the end surface (31) of the lamination body (3), of insulation members (37, 39) and secondly of lateral abutments (49, 51) which prevent a lateral slipping of the cable tie (13) by abutment against counter abutments (53, 55) at the insulation members (37, 39).

3. Holder according to one of the preceding claims, characterised thereby that the cable tie (13) is an injection-moulded part and consists of a thermoplastic.

## Revendications

1. Fixation pour têtes d'enroulement (11) de machines électriques au moyen d'un lien de câble (13) en forme de collier, entourant les parties d'enroulement de la tête, qui à une extrémité (15) est en forme de languette et présente une denture (28) dans laquelle une dent d'encliquetage élastique peut être encliquetée à l'autre extrémité d'un élément de fermeture, caractérisée en ce que le lien de câble (13) en forme de collier présente, entre sa denture (28) et l'élément de fermeture (23), une patte d'arrêt (27) qui peut être introduite et coincée dans l'espace intermédiaire (29) compris entre la bobine (11, 41, 43) et la face frontale (31) du paquet de tôles (3) correspondant.

2. Fixation selon la revendication 1, caractérisée en ce que la patte d'arrêt (27) est rectangulaire avec des découpes rectangulaires à ses angles inférieurs pour former des bords de butée (33, 35), qui peuvent être amenés en application avec des surfaces de butée (38, 40), faisant saillie par rapport à la face frontale (31) du paquet de tôles (3), de pièces isolantes (37, 39), ainsi que des butées latérales (49, 51) qui empêchent un glissement latéral du lien de câble (13), en venant buter contre des contre-butées (53, 55) des pièces isolantes (37, 39).

3. Fixation selon l'une des revendications précédentes, caractérisée en ce que le lien de câble (13) est un élément en matière plastique moulé par injection et est réalisé dans une matière thermoplastique.
